# EUROPEAN PATENT APPLICATION

(11) **EP 0 963 869 A1**
(43) Date of publication of application: **15.12.1999**
(21) Application number: 99201590.9
(22) Date of filing: 21.05.1999
(51) Int. Cl.: B60H 1/32

(54) **A vehicle comprising a loading space and a cooling system for cooling said loading space**

(30) Priority: 10.06.1998 NL 1009363; 13.01.1999 NL 1011010
(71) Applicant: Willems en Jansen B.V., 1431 GG Aalsmeer (NL)
(72) Inventor: Jansen, Jan, 2914 TN Nieuwerkerk A/D IJssel (NL)
(74) Representative: Hooiveld, Arjen Jan Winfried

(57) **Abstract**

A vehicle comprising a loading space and a cooling system for cooling said loading space by carrying out a vapour compression cycle, which cooling system comprises a compressor (2), a condenser (3) and at least two evaporators (6',6'') which are incorporated in at least one closed circuit for a coolant, wherein control means (10) are provided for controlling the mass flow of the coolant to the individual evaporators, wherein the evaporators (6',6'') are capable of jointly cooling the loading space to one adjustable temperature, wherein the control means (10) can be adjusted in dependence on at least one cooling process parameter in the loading space.

## Description

The invention relates to a vehicle comprising a loading space and a cooling system for cooling said loading space by carrying out a vapour compression cycle, which cooling system comprises a compressor, a condenser and at least two evaporators which are incorporated in at least one closed circuit for a coolant, wherein control means are provided for controlling the mass flow of the coolant to the individual evaporators. It is noted that the term "vehicle" as used herein must be understood to include a vessel or an aircraft, whilst the term "cooling" is understood to mean freezing as well.

A vehicle of this kind is generally known. The operating principle of a vapour compression cycle is as follows: the pressure and the temperature of the vapour of the coolant are increased by the compressor before the coolant enters the condenser, where it is cooled and condensed and delivers heat to the atmosphere outside the space to be cooled. The pressure and the temperature of the coolant under high pressure are then reduced to the pressure and the temperature of the evaporator device by means of an expansion valve. Within said evaporator device, the coolant expands and evaporates, thereby absorbing heat from the space to be cooled. The vapour at the outlet of the evaporator device is supplied to the compressor, thus completing the cycle.

One drawback of the known vehicle is the fact that the ambient temperature in the loading space increases when non-cooled cargo is introduced into the loading space and/or when the loading space is left open for a prolonged period of time during loading/unloading, as a result of which the pressure of the expanded coolant at the compressor inlet will increase and the compression pressure will rise to an even much higher level. The consequence of this is that an excessive compressor output is required, as a result of which the cooling system will be overloaded if no additional measures are taken. It must be considered thereby that cooling systems which are used in said vehicles must be capable of generating large outputs, whilst at the same time they must be very compact. Because of these requirements, cooling systems often operate at the limit of their capacity, which is designed on the basis of heat dissipation at a particular temperature to be maintained, for example 0° Celsius (cooling) of -20° Celsius (freezing). Recently, the above-indicated drawback has become all the more pressing now that the use of conventional coolants (chlorofluorocarbons) is being banned by the authorities because of the ozone depletion effect thereof, and the pressures of alternative coolants in expanded conditions are many times higher with the aforesaid increased ambient temperature than is the case with the traditionally used coolants.

One known measure for overcoming the above drawback is based on the regulation of the compressor capacity by throttling or bypassing. These measures involve the use of more complicated flow circuits and components, they require additional equipment and they lead to a reduced efficiency when loaded only partially and to further complications. More in particular, it is known to use a so-called "starting regulator", which is disposed at the compressor inlet and which throttles the through-flow of coolant when the pressure thereof rises to an excessive level. One drawback of this, however, is the fact that the cooling system is not stable when large temperature fluctuations occur, resulting in excessive throttling and rarefying and overheating of the cooling gas. As a result of this, the cooling effect of the cooling gas on the compressor is lost practically entirely. As a consequence, the quality of the lubricating oil in the compressor will strongly decrease and said oil will evaporate and be carried along into the circuit, where it will be burned, due to the fact that the temperature will rise even further, and pollute the cooling system. In the cooling haulage industry this problem connected with the use of chlorine-free coolants is found to be a major problem.

Another drawback of the known vehicle is the fact that the frequent opening of the lading space door and/or the introduction of hot, humid cargo causes the air humidity level in the loading space to rise to a relatively high level, as a result of which the evaporator ices up relatively quickly. Said ice must be periodically removed, which as a rule is done by using electric defrosting means or by reversing the mass flow in the installation, as a result of which the evaporator is temporarily heated. No cooling of the loading space can take place during said defrosting process, of course, since the time used for defrosting may run up to 30-50% of the total time.

The object of the invention is to overcome the above-described drawbacks of the prior art and provide in particular a vehicle comprising a loading space and a cooling system for cooling said loading space, wherein said cooling system reacts to large temperature fluctuations in the loading space to be cooled and to icing up of the evaporators in a stable manner, without this having an adverse effect on the overall condition and operation of the cooling system.

In order to accomplish that objective, a vehicle of the kind referred to in the introduction is characterized in that the evaporators are capable of jointly cooling the loading space to one adjustable temperature, wherein the control means can be adjusted in dependence on at least one cooling process parameter in the loading space. More in particular, said control means are provided with sensor means which are capable of measuring at least one cooling process parameter, and wherein said control means are capable of regulating the mass flow of coolant to the individual evaporators. This makes it possible to adapt the capacity of the installation as a whole as well as that of the individual evaporators, whereby a continuous operation of the installation is ensured.

In one embodiment said measuring means comprise a clock, wherein the measured cooling process parameter comprises the time during which the cooling system is operative, or said measuring means comprise ice detection means, which are capable of detecting the presence of ice on the individual evaporators, and wherein the measured cooling process parameter comprises the detected presence of ice. The evaporators are preferably provided with electric defrosting means, which are controlled by said ice detection means and/or by said clock.

Preferably, the second evaporator is incorporated in a second closed circuit, which further includes a second compressor and a second condenser. In that case, said control means are capable of reversing the mass flow in one of said closed circuits periodically or in dependence on the detected presence of ice, in order to remove said ice from the evaporator.

In another embodiment, the evaporator device comprises at least two evaporators, and said control means comprise at least one valve, which, in an open position thereof, allows the mass flow of the coolant to both evaporators, and which, in a closed position thereof, closes the mass flow of the coolant to one of the two evaporators. The purpose of this measure is to be able to adapt the capacity of the installation to the conditions without the process parameters reaching a critical level. In order to simplify the cooling system, the valve closes the mass flow of the coolant in particular to a predetermined evaporator in its closed position. The evaporators are preferably separate evaporators units which are connected in parallel. In another preferred embodiment, the evaporators form one unit, but they each contain a separate coolant inlet and an evaporation area.

In one preferred embodiment of a vehicle according to the invention, the capacities of the two evaporators are in the proportion of 4 : 1, in particular 3 : 1, more in particular 2 : 1, more in particular 1 : 1.

In another preferred embodiment of a vehicle according to the invention, said valve is a magnetic valve. Said valve is excited in particular in dependence on a cooling process parameter measured by a sensor, preferably the (average) temperature in the loading space. When said temperature reaches a level above a predetermined limiting value, the valve is excited.

In another preferred embodiment of a vehicle according to the invention, the evaporator device includes at least two throttling elements, each associated with one evaporator. Said throttling elements are in particular in the form of expansion valves.

The invention also relates to a cooling system which is obviously suitable for use in a vehicle according to the invention.

The invention furthermore relates to a method for cooling a loading space of a vehicle by carrying out a vapour compression cycle, wherein a coolant is passed through at least one closed circuit comprising a compressor, a condenser and at least two evaporators, and wherein the mass flow of the coolant to the individual evaporators is controlled, wherein the evaporators jointly cool the loading space to one adjusted temperature, and wherein said control means are adjusted in dependence on at least one cooling process parameter in the loading space. In one of the embodiments, the second evaporator is incorporated in a second closed circuit, which furthermore comprises a second compressor and a second condenser. In another embodiment, the mass flow of the coolant to the compressor is controlled by a valve, which, in an open position thereof, allows the mass flow to both evaporators, and which, in a closed position thereof, closes the mass flow to one of the two evaporators.

The invention will be explained in more detail hereafter with reference to figures illustrated in a drawing, wherein:
- Figure 1 is a schematic diagram of the physical principle of the present cooling system;
- Figure 2 is a schematic representation of a prior art cooling system, wherein a so-called "starting regulator" is used;
- Figure 3 is a schematic representation of a preferred embodiment of a cooling system according to the invention; and
- Figure 4 is a schematic representation of a second preferred embodiment of a cooling system according to the invention.

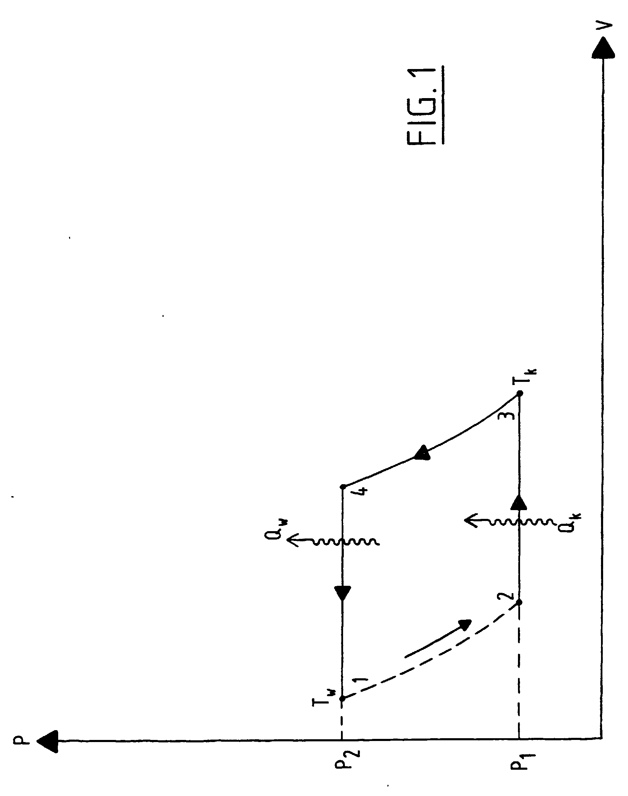

The schematic diagram of Figure 1 shows the path of a constant mass of coolant as it is transported at a temperature and a pressure associated with the condenser, through the expansion valve, through the evaporator device, to the compressor, and finally back to the condenser. Starting from point 1 in the diagram, corresponding to the condition of the saturated coolant at the temperature and pressure associated with the condenser, the cooling system consists of the following processes:
- 1 → 2: A throttling process comprising a pressure and temperature drop. The conditions between the original condition and the eventual condition of the coolant during a throttling process cannot be described by means of thermodynamic coordinates relating to the cooling system as a whole, which is why they cannot be represented at points in the PV diagram. All this is now shown by means of a dotted line between 1 and 2.
- 2 → 3: Isothermal, isobaric evaporation wherein heat Qₖ is absorbed by the coolant at a low temperature Tₖ, thus cooling the loading space.
- 3 → 4: Adiabatic compression of the vapour to a temperature higher than that of the condenser T_{w}.
- 4 → 1: Isobaric cooling and condensation at a temperature T_{w}.

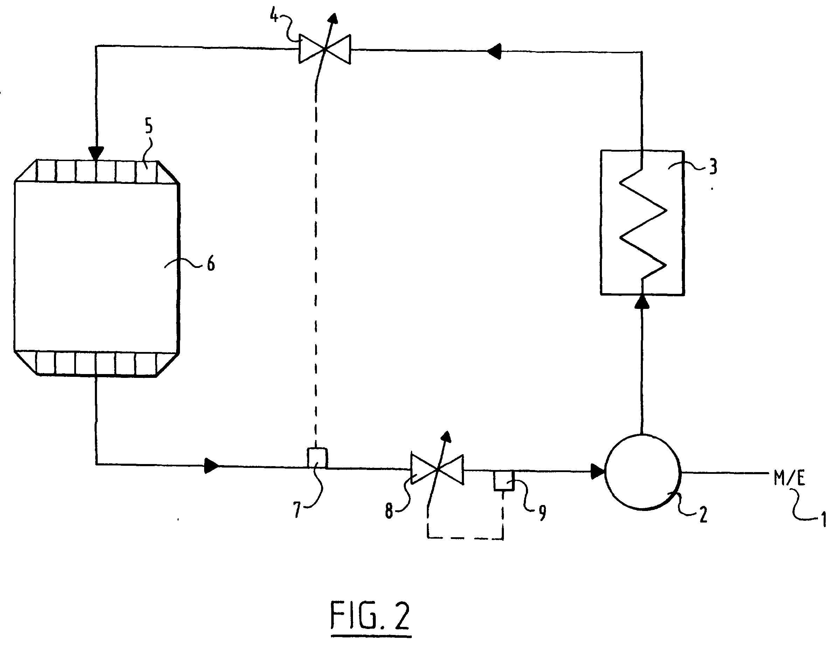

Figure 2 shows a conventional, compact cooling system according to the prior art for cooling (at about 0 °Celsius) or freezing (at about -20 °Celsius) of loading space portions A and B of a truck. The cooling system comprises a compressor 2 driven by the truck engine, by a separate diesel engine or by an electrical driving unit 1, a condenser 3, as well as an evaporator device consisting of an expansion valve 4, a distributor 5 and an evaporator 6. Furthermore provided are a temperature sensor 7 connected to said expansion valve, as well as a starting regulator 8 connected to a pressure sensor 9.

The pressure and the temperature of the gaseous coolant are increased by compressor 2, after which the coolant enters condenser 3, where it condensates and delivers heat to the atmosphere outside the loading space to be cooled. The cooling liquid under high pressure is subsequently throttled to the desired evaporation pressure and temperature by expansion valve 4 in dependence on the temperature conditions (measured by temperature sensor 7) upon exiting evaporator 6. Via distributor 5, the coolant enters evaporator 6, where the liquid expands and evaporates while absorbing heat from the surrounding atmosphere. The coolant, which is gaseous by now, is recirculated to compressor 2 via starting regulator 2, thus completing the circuit.

Starting regulator 8 functions to control the cooling capacity when the cooling system is being overloaded, for example when new, relatively hot cargo is introduced into the space, or when the doors of the loading space remain open for a prolonged period of time. This expresses itself in excessive pressure at the inlet of compressor 2, as a result of which the required output of compressor 2 becomes too high. The excessive pressure is detected by pressure sensor 9, which controls starting regulator 8 to throttle the through-flow of cooling gas. A simpler alternative, which is also used frequently, is a restriction, which only passes a pre-adjusted (maximum) amount of gas.

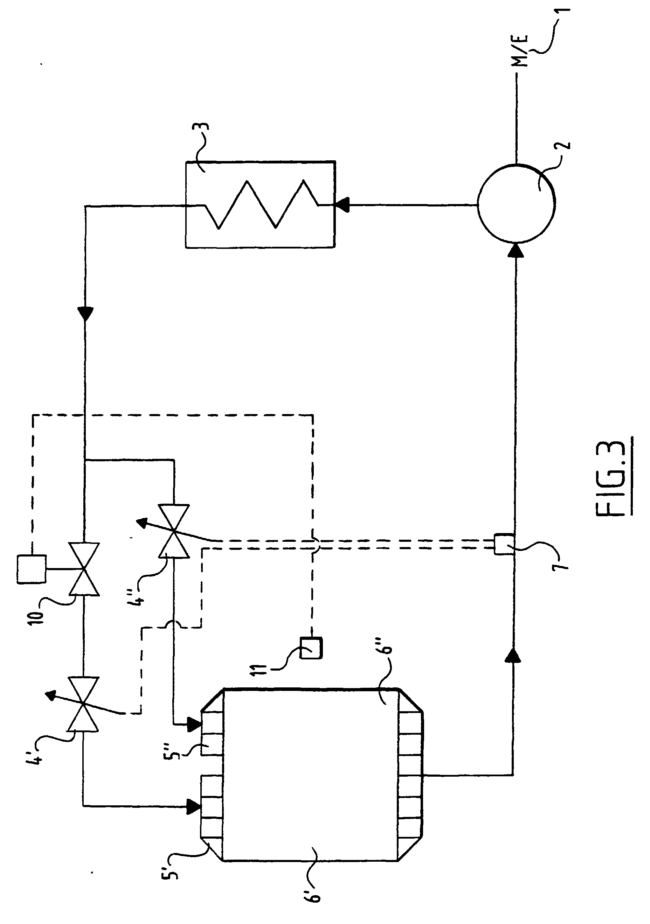

Referring to Figure 3, according to the invention the starting regulator 8 is not used, but the pressure at the inlet of compressor 2 can be controlled by using an evaporator device consisting of two evaporators, each having its own expansion valve 4', 4'' and its own distributor 5', 5'', which are arranged side by side in an evaporator unit, and wherein the evaporation process in evaporator 6' can be interrupted by means of a magnetic valve 10. Magnetic valve 10 is controlled by a temperature sensor 11, which registers the temperature in the loading space to be cooled.

Under normal circumstances the magnetic valve 10 is open, and the entire evaporation area of the evaporators 6' and 6'' is used. When the ambient temperature in the space to be cooled runs up, however, and consequently the gas pressure at the compressor inlet becomes too high, magnetic valve 10 is closed, as a result of which only part of the total evaporation area, namely that of evaporator 6'', is used. This enables the coolant still being passed to expand to the desired pressure and temperature. Preferably, the part of the evaporation area which can be closed by magnetic valve 10 amounts to about 1/3 of the total area. The function of temperature sensor 7 is similar to the function as described with reference to Figure 2.

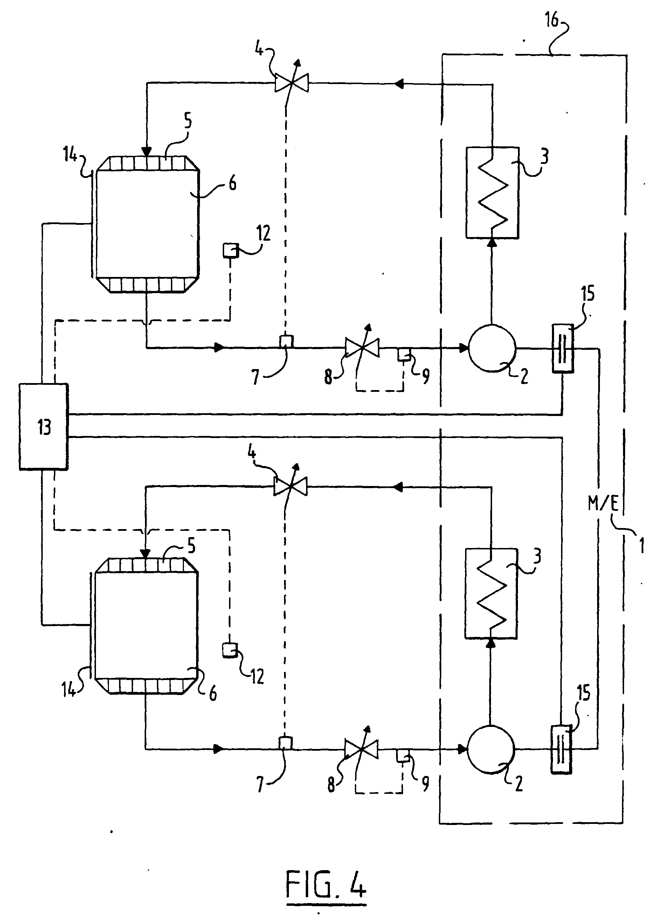

Referring to Figure 4, in a second preferred embodiment of the invention two separate circuits are used, each comprising a compressor 2, a condenser 3 and an evaporator 6. In the preferred embodiment, both circuits are driven by one common motor 1, but it is also possible to provide each circuit with its own motor 1. Evaporators 6 are provided with ice detection means 12, which are connected to a control unit 13. Ice detection means 12 may be in the form of pressure difference gauges, which measure the pressure difference between the air inlet and the air outlet of the air flow past the evaporator. The forming of ice interferes with the air flow past the evaporator, which is supplied by means of a fan, resulting in a measurable air pressure difference. Instead of using ice detection means, it is also possible to use a time switch, which activates the evaporation process at predetermined times. When the presence of ice on one of the evaporators 6 is detected, or when the predetermined period of time has elapsed, control unit 13 can activate electric defrosting means 14 associated with the evaporator 6 in question. At the same time, or independently thereof, control unit 13 can disconnect the compressor 2 associated with the evaporator in question from motor 1 by means of electromagnetic connecting means 15, or even reverse the direction of the mass flow by means of a valve assembly (not shown), in order to effect quick defrosting of the respective evaporator 6, whilst the other cooling circuit remains operative.

In the preferred embodiment, motor 1, compressors 2 and condensers 3 are disposed in a housing 16.

It is noted that according to the invention it is also possible to use a combination of the two embodiments as shown in Figures 3 and 4, wherein ice detection means 12/defrosting means 14 as well as temperature sensors 11/magnetic valves 10 are used. This combination can be used in a single circuit comprising two evaporators as well as in two entirely separated circuits.

## Claims

1. A vehicle comprising a loading space and a cooling system for cooling said loading space by carrying out a vapour compression cycle, which cooling system comprises a compressor, a condenser and at least two evaporators which are incorporated in at least one closed circuit for a coolant, wherein control means are provided for controlling the mass flow of the coolant to the individual evaporators, **characterized in that** the evaporators are capable of jointly cooling the loading space to one adjustable temperature, wherein the control means can be adjusted in dependence on at least one cooling process parameter in the loading space.

2. A vehicle according to claim 1, wherein said control means are provided with measuring means, which are capable of measuring at least one cooling process parameter, and wherein said control means are capable of regulating the mass flow of coolant to the individual evaporators in dependence on the measured cooling process parameter.

3. A vehicle according to claim 2, wherein said measuring means comprise a clock, and wherein the measured cooling process parameter comprises the time during which the cooling system is operative.

4. A vehicle according to claim 2, wherein said measuring means comprise ice detection means, which are capable of detecting the presence of ice on the individual evaporators, and wherein the measured cooling process parameter comprises the detected presence of ice.

5. A vehicle according to claim 3 or 4, wherein said evaporators are provided with defrosting means, preferably electric defrosting means, which are controlled by said clock and/or by said ice detection means.

6. A vehicle according to claim 2, 3, 4 or 5, wherein said cooling process parameter comprises temperature, preferably the average temperature, in the loading space.

7. A vehicle according to any one of the preceding claims 1 - 6, wherein the second evaporator is incorporated in a second closed circuit, which further includes a second compressor and a second condenser.

8. A vehicle according to claim 6, wherein said control means are capable of reversing the mass flow in one of said closed circuits in dependence on the detected presence of ice.

9. A vehicle according to any one of the preceding claims 1 - 8, wherein said control means comprise at least one valve, which, in an open position thereof, allows the mass flow of the coolant to both evaporators, and which, in a closed position thereof, closes the mass flow of the coolant to one of the two evaporators.

10. A vehicle according to claim 9, wherein the valve closes the mass flow of the coolant to a predetermined evaporator in its closed position.

11. A vehicle according to claim 9 or 10, wherein said evaporators form separate evaporator units.

12. A vehicle according to claim 9, 10 or 11, wherein the capacities of the two evaporators are in the proportion of 4 : 1, in particular 3 : 1, more in particular 1 : 1.

13. A vehicle according to any one of the preceding claims 9 - 12, wherein said valve is a magnetic valve.

14. A vehicle according to any one of the preceding claims 9 - 13, wherein the cooling comprises at least two throttling elements, each associated with one evaporator.

15. A vehicle according to claim 14, wherein said throttling elements are expansion valves.

16. A cooling system which is obviously suitable for use in a vehicle according to any one of the preceding claims 1 - 15.

17. A method for cooling a loading space of a vehicle by carrying out a vapour compression cycle, wherein a coolant is passed through at least one closed circuit comprising a compressor, a condenser and at least two evaporators, and wherein the mass flow of the coolant to the individual evaporators is controlled, **characterized in that** the evaporators jointly cool the loading space to one adjustable temperature, wherein the control means are adjusted in dependence on at least one cooling process parameter in the loading space.

18. A method according to claim 17, wherein the second evaporator is incorporated in a second closed circuit, which further includes a second compressor and a second condenser.

19. A method according to claim 17 or 18, wherein the mass flow of the coolant to the compressor is controlled by a valve, which, in an open position thereof, allows the mass flow to both evaporators, and which, in a closed position thereof, closes the mass flow to one of the two evaporators.
